# EUROPEAN PATENT APPLICATION

(11) **EP 0 767 068 A2**
(43) Date of publication of application: **09.04.1997**
(21) Application number: 96115968.8
(22) Date of filing: 04.10.1996
(51) Int. Cl.: B41K 1/36, B41K 1/56, A63H 5/00, A63F 9/24, G09B 5/06

(54) **Sound generating stamping device**

(30) Priority: 06.10.1995 US 539941
(71) Applicant: BINNEY & SMITH INC., Easton Pennsylvania 18044-0431 (US)
(72) Inventor: Cook, Richard, Phillipsburg, New Jersey 08865 (US); Dietterich, Charles W., Brodheadsville, Pennsylvania 18322 (US); Filo, Andrew S., Cupertino, California 95014 (US)
(74) Representative: Hoeger, Stellrecht & Partner

(57) **Abstract**

An interactive stamping device is shown for the entertainment and educational development of children. A stamper having a housing is configured to receive and identify interchangeable stamps, wherein each stamp includes a visual image impressioned thereon. A contact sensor is configured to detect pressure applied to a surface of the received stamp. A transmitter is provided to transmit the pressure and identification information to a sound generator, which processes the pressure and identification information and emanates a sound that is logically associated with visual image on the stamp.

## Description

### Field of the Invention

The present invention relates to stamping devices, and more particularly, to stamping devices directed to the entertainment and development of children.

### Background of the Invention

Various entertainment and development devices for children have long been known. For a great number of years, for example, drawing and coloring books have provided countless hours of entertainment for children. It is recognized by professionals among the various fields studying early childhood development, that sensory stimulation generally adds to the intrigue or enjoyment of a given activity. Such stimulation provides a subtle means of encouragement for the child to continue the activity and therefore promotes the education and development associated with that particular activity. Indeed, development in children is greatly enhanced by devices that stimulate both sight and sound.

It should be appreciated that the art of educational and development devices for children is an extremely competitive field and having a wide variety of devices available. Accordingly, cost is an extremely critical factor when developing devices for entry into this market. Devices must not only achieve their intended functionality, but must do so with practical, cost effective designs.

Another important consideration that drives design solutions when developing products intended for use with small children relates to child safety. For example, it is desirable to eliminate or at least minimize the number of small independent or detachable pieces that could possibly choke a young child. Similarly, in devices that have cords or cabling, the cord or cabling length is generally short enough to where a child could not become entangled.

It is further desired to develop products that children may use with little or no adult supervision. Although adult support and encouragement of childhood development activities may provide a strong motivation for children to continue or repeat such activities, a more desirable means of encouragement would be a means where constant adult supervision is not required. This not only relaxes the burden on the attending adult, but also enhances the sense of satisfaction a child may achieve while working or playing independently. In this regard, it is desirable to reduce the number of independent or detachable pieces to minimize the risk of lost pieces when children are playing unsupervised.

It can be appreciated from the foregoing, that when developing devices directed for use by children, particularly young children, a number of important design considerations play an important role in the ultimate product development.

### Summary of the Invention

Accordingly, it is a primary object of the present invention to provide an interactive device that effectively promotes the education and development of children.

Another object of the present invention is to provide a cost-effective device that combines audio and visual stimuli to provide entertainment for children.

Still another object of the present invention is to provide a device directed to promote the education and development of young children, having a design solution that maintains a high level of child safety.

Yet another object of the present invention is to provide a device directed to promote the education and development of young children, requiring minimal adult supervision.

Additional objects, advantages and other novel features of the invention will be set forth in part in the description that follows and in part will become apparent to those skilled in the art upon examination of the following or may be learned with the practice of the invention. The objects and advantages of the invention may be realized and obtained by means of the instrumentalities and combinations particularly pointed out in the appended claims.

To achieve the foregoing and other objects, the present invention is generally directed to an interactive stamping device having a stamper configured to receive interchangeable stamps. Each stamp includes a visual image for transferral to a stamping surface by, for example, inking the stamp before applying it to the stamping surface. A stamp identifier is disposed to uniquely distinguish the individual stamps received by the stamper. A sensor detects pressure applied to a surface of the received stamp. A sound generator, responsive to both the stamp identifier and the sensor, is provided for generating a sound that is indicative of, or logically associated with, the visual image imprinted on the particular stamp identified by the stamp identifier.

### Brief Description of the Drawings

The accompanying drawings incorporated in and forming a part of the specification, illustrate several aspects of the present invention, and together with the description serve to explain the principles of the invention.
Figure 1 is a top plan view of one embodiment of the present invention;
FIG. 2A is a cross-sectional side-view of the area of FIG. 1 enclosed in dashed lines;
FIG. 2B is an exploded perspective view of the area portion shown in FIG. 2A;
FIG. 3 is a cross-sectional side-view of a stamp for use with the present invention, showing the relative dimensions of identification tabs;
FIG. 4 illustrates the electrical component distribution of one embodiment of the present invention;
FIG. 5 is a functional block diagram of an embodiment of the present invention;
FIG. 6 is a circuit diagram of one embodiment of the present invention;
FIGS. 6A-6C illustrate circuit diagrams of other embodiments of the present invention;
FIG. 7 is a top plan view of another embodiment of the present invention;
FIG. 8 is a perspective view of yet another embodiment of the invention;
FIG. 9 is a cross-sectional side view of the stamp handle taken substantially along line 9-9 of FIG 8;
FIG. 10 is a bottom perspective view of another embodiment of the invention; and,
FIG. 11 is a cross-sectional view of another embodiment of the invention.

Reference will now be made in detail to various present embodiments of the invention, examples of which are illustrated in the accompanying drawings.

### DETAILED DESCRIPTION OF THE INVENTION

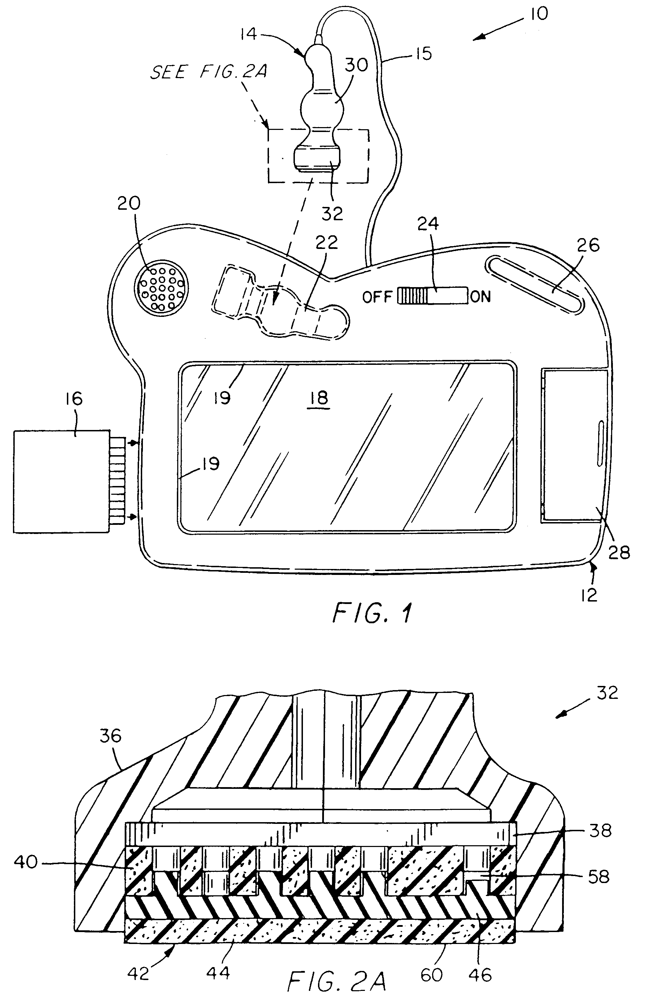

Referring to the drawings, FIG. 1 shows a sound generating stamping device of the present invention, which is generally designated by reference numeral 10. The device is principally comprised of a base unit 12 and a stamper 14, interconnected by conductive cabling 15. A cartridge 16, having internal sound generating circuitry that will be described later, may also be provided in this embodiment.

The base unit 12 includes a stamping surface 18 disposed to receive a stamped image. This stamping surface 18 can be an ABS or HIPS resin material that is readily erasable with, for example, a moistened paper towel or an eraser which may be optionally provided with the unit. The stamping surface 18 is recessed slightly and is defined by a lip 19 of the surrounding housing. The stamping surface 18 can be eight and one-half inches by eleven inches to readily support the insertion of a standard size bond paper for stamping. In this regard, the lip 19 defining the stamping surface 18 facilitates the retention of the paper while in use. Although an erasable surface is provided, it can be appreciated that the use of paper may often be useful when, for example, it is desired to generate a permanent stamped image. The use of paper also, advantageously, eliminates the need for frequent erasure.

A speaker 20 is included to provide the sound emanations that will be further described below. Also, the base unit 12 includes a recessed portion 22 contoured to provide a convenient storage location for stamper 14. An ON/OFF switch 24 controls the application of power to the electronic circuitry, and therefore enables and disables the sound operation of the present invention. A cutout 26 provides an easy-carry handle for the device, and access panel 28 provides access to an internal storage area. More particularly, and as will become more fully appreciated, the electronic circuitry of this embodiment may be substantially contained in cartridge 16, thereby reducing the size of the device and allowing internal space for storage. The access panel 28 is hinged for movement between open and closed positions, allowing ready access to the internal storage space, which may be used to store interchangeable stamps and ink pads, as well as the support cartridge 16 when not in use.

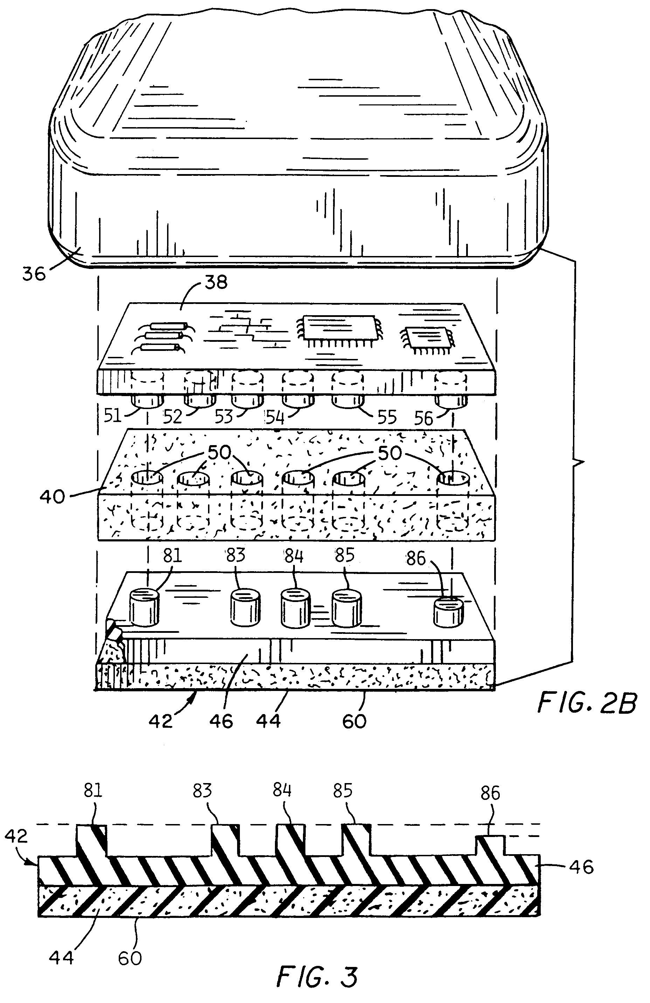

The stamper 14, is designed for easy hand-held use, and is electrically connected to the base unit 12. The stamper 14 includes a handle portion 30 and a stamping portion 32. The handle portion 30 is contoured for easy and comfortable gripping. The stamping portion 32 is adapted to receive and identify interchangeable stamps, and will be described in more detail in connection with FIGS. 2A and 2B.

A conductive cable 15 is illustrated to electrically connect the stamper 14 and the base unit 12. This cable 15 includes a plurality of conductive wires for electrically communicating data from the stamper 14 to the base unit 12. It can be appreciated that, consistent with the concepts and teachings of the present invention, other media for communicating electronic data could be utilized. For example, ultra-sonic, RF, or infra-red transmitters and receivers could be utilized in manners known and understood by persons of ordinary skill, to support wireless communication between the stamper 14 and base unit 12. Nevertheless, communication between conductive cable 15 is advantageous for a number of reasons, including cost-effectiveness. In addition, since the device is intended for use by young children, providing a short cabling 15 attachment between the stamper 14 and base unit 12 encourages the user to apply the stamper to surface 18, rather that walk about and apply the stamper 14 to walls and other undesired surfaces. Furthermore, attaching the stamper 14 to the base unit 12 prevents a child from losing the stamper 14, as by carrying it away from the base unit.

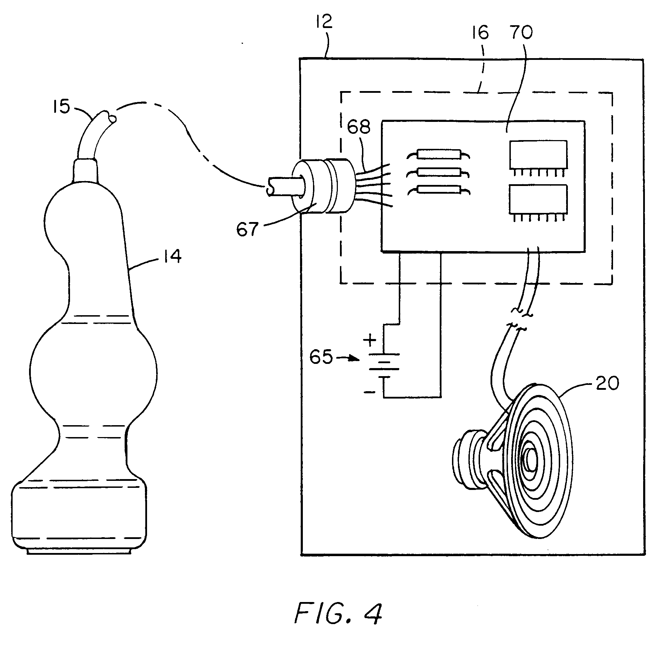

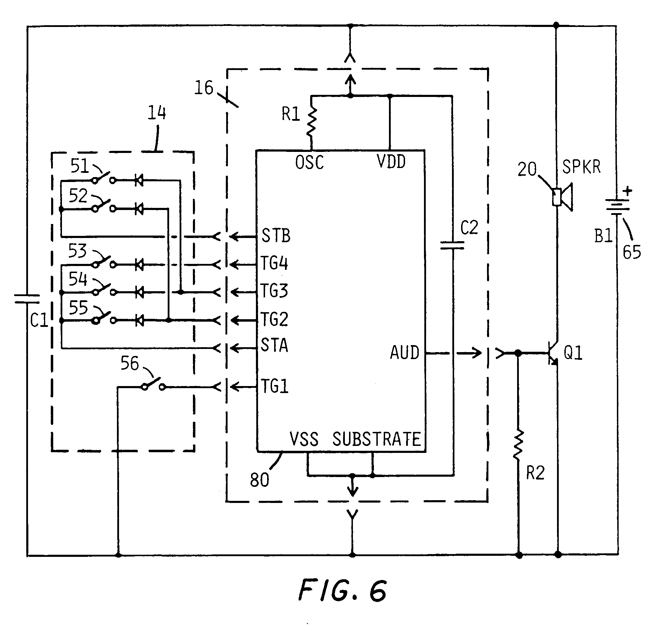

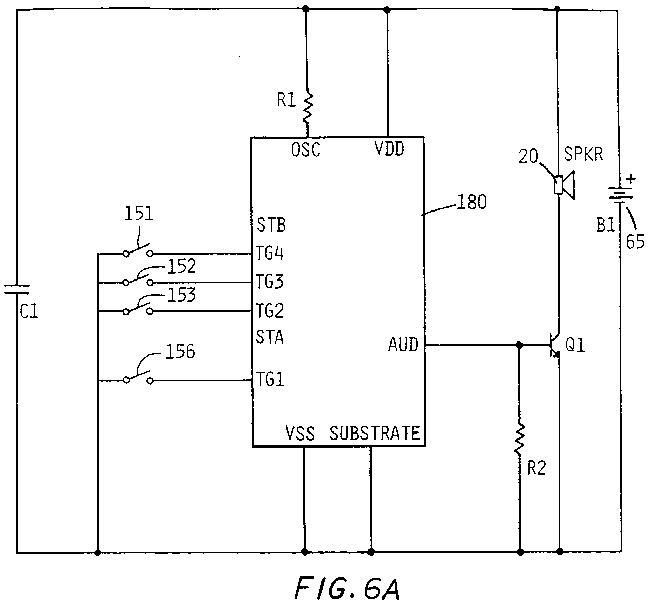

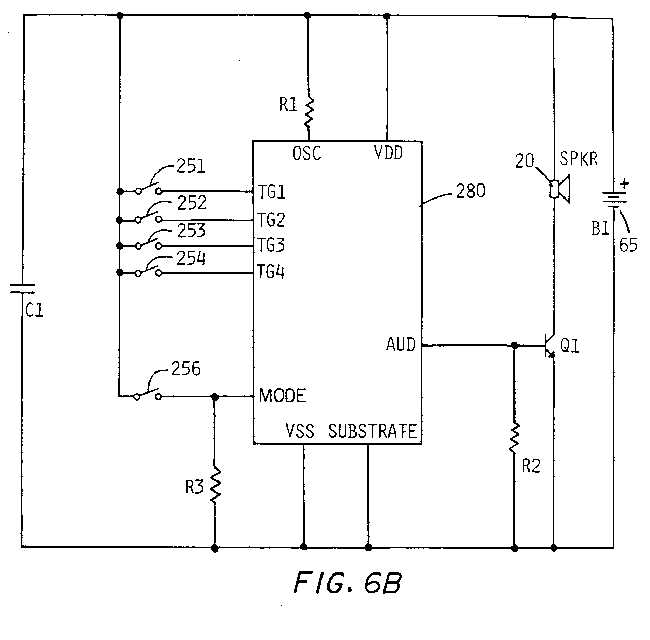

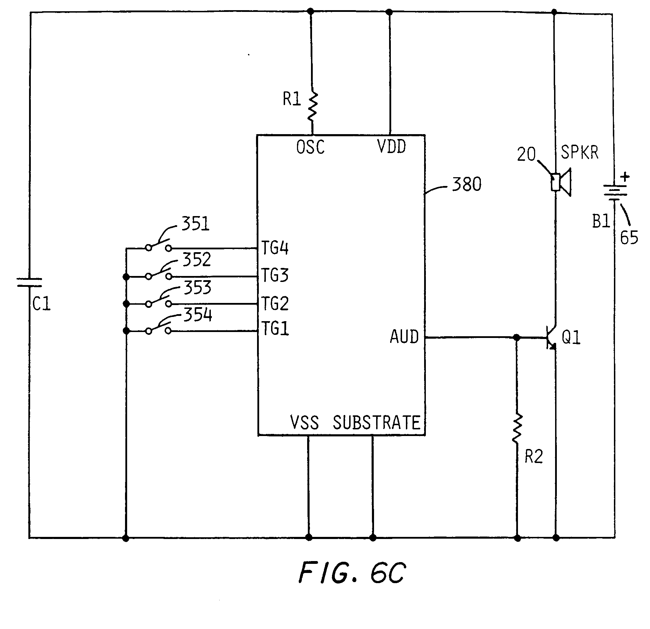

Finally, as illustrated in FIG. 1, a cartridge 16 is provided which may include the sound generating control circuitry of the present invention. Indeed, as will be appreciated in the discussion of FIG. 6 and as illustrated in FIG. 4, the circuitry contained in the base unit 12 generally includes the speaker 20 and battery 65, with the remainder of the circuitry generally being contained in the stamper 14 and the cartridge 16.

While the cartridge 16 is not a necessary element of the broad concepts and features of the present invention, it may be advantageous because it provides added flexibility and functionality to the device and its operation. For example, it may be desirable for marketing and distribution purposes to sell the base unit 12 with a standard cartridge 16 and a number of stamps 42. Supplemental cartridges 16 may be: (1) sold separately and provide different functionality to the standard set of stamps; or (2) sold along with a new and differing set of stamps to provide a whole new set of stamps and sounds. In this way, the invention may achieve tremendous flexibility at substantial cost-savings.

Reference will now be made collectively to FIGS. 2A and 2B. FIG. 2A is a cross-sectional side view of the stamping portion 32 of stamper 14, and FIG. 2B is an exploded perspective view thereof. A housing 36 is disposed to receive a printed circuit board 38, a foam pad 40, and a stamp 42. The stamp 42 is comprised of two portions: a rubber portion 44 and a base portion 46. The rubber portion 44 includes a surface having a visual image that is to be applied to an inking pad for transfer of the visual image to the stamping surface 18. The base portion 46 comprises a more rigid material such as plastic which is integrally formed with the rubber portion 44.

The printed circuit board 38 and foam pad 40 are fixed within the housing 36. Pressure sensitive switches 51-55 and 56 are disposed on the underneath side of the printed circuit board 38 so as to align with holes 50 provided in the foam pad 40. Corresponding tabs 81-85 (82 omitted from illustrated embodiment) and 86 project through the holes 50 in the foam pad 40 to align with switches 51-55 and 56.

Switches 51-55 cooperate with corresponding tabs 81-85 to form an identifying code for the particular stamp 42. Specifically, when stamp 42 is inserted, the tabs 81-85 apply pressure to switches 51-55, causing the switch contacts to close. In the illustrated embodiment, for example, tab 82 is missing. Therefore, the identifying code associated with the illustrated stamp 42 is 10111 in binary format (i.e., 81, 83, 84, and 85 are present and 82 is absent). It can be appreciated that switches 51-55, each being either open or closed, represent a five-bit binary code that uniquely identifies each stamp 42, for a total of 32 uniquely identified stamps.

For purposes of the present invention, the particular type of switch used for 51-55 is a rubber key switch. However, other switches could be used because the purpose of the switches is merely to provide a means of identifying the particular stamp 42 inserted into housing 36. Accordingly, these switches are illustrated in block form. Instead of utilizing switches, however, a much more sophisticated identification means, such as a magnetic encoder/decoder combination, could be employed. Furthermore, additional switches could be used to provide identification of a larger number stamps 42. More particularly, each additional switch doubles the number of stamps 42 that are uniquely identified. Thus, adding a sixth switch would result in 64 uniquely identifiable stamps 42. Five switches are employed in the illustrated embodiment due to the particular electronic components selected for realizing the sound generation circuitry.

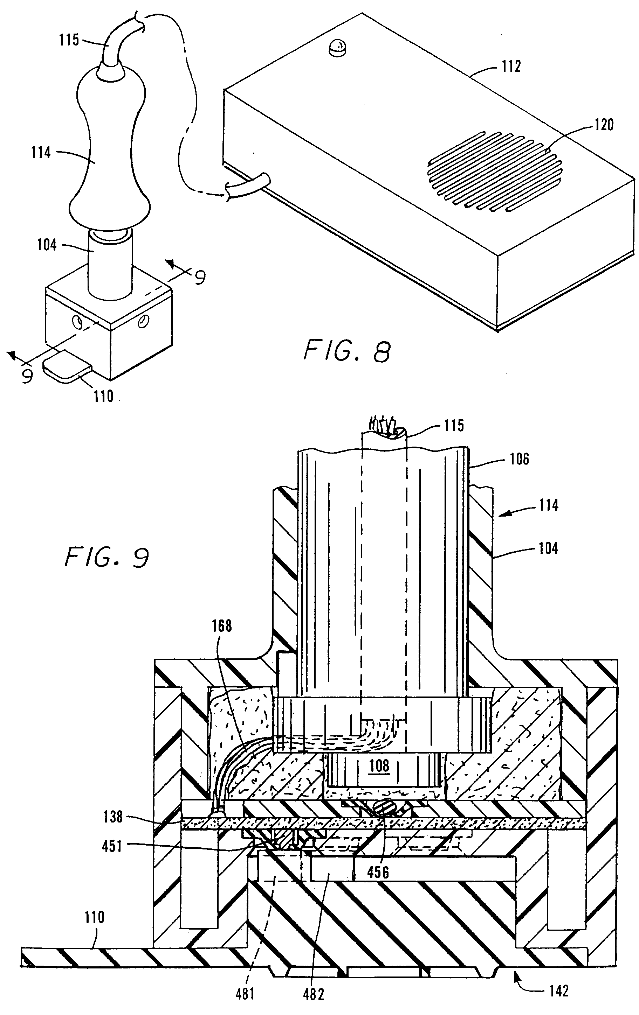

Once stamp 42 is inserted properly into housing 36, as shown in FIG. 2A, switches 51, 53, 54, and 55 are closed by the pressure contact from tabs 81, 83, 84, and 85. Since tab 82 is not provided on the stamp 42 of the illustrated embodiment, switch 52 remains open. Also, as illustrated by gap 58, start switch 56 remains open. More particularly, and in reference to FIG. 3, start tab 86 is slightly recessed below the level of tabs 81-85. Accordingly, start switch 56 is not actuated upon mere insertion of stamp 42 into housing 36. Instead, pressure must be exerted upon the face 60 of stamp 42, which in turn compresses foam pad 40, thereby allowing start tab 86 to make pressure contact with start switch 56. As will be described in connection with the sound generating circuitry of FIG. 6, closure of start switch 56 triggers the sound generating circuitry to emanate the particular sound corresponding to stamp 42. Although a slightly different mechanical configuration is associated with the start switch 456 in the embodiment shown in FIGS. 8 and 9, the functionality there is the same as is discussed here.

As described above, start switch 56 serves as a contact sensor, detecting pressure contact with the surface 60 of stamp 42. Consistent with the concepts and teachings of the present invention, other pressure contact sensors could be employed. For example, a pressure sensor, such as a membrane switch, could be used in connection with stamping surface 18 (FIG. 1) to detect when pressure is applied to it. This would have the advantage of further encouraging the user to apply the stamp to the stamping surface 18, rather than some other, undesired surface. The disadvantage, however, is that the sound generating circuitry would be activated upon any pressure contact with surface 18, rather that just pressure applied from the stamp 42. Furthermore, both objects could be achieved by providing contact sensors in both the stamper 14 and the stamping surface 18. However, this approach would complicate the design and increase the cost. Accordingly, it is advantageous to utilize the contact sensor (start switch 56) in connection with the stamp 42 as illustrated.

In this embodiment, sound is emanated only upon start switch 56 detecting pressure contact with surface 60 of stamp 42. In another embodiment, however, sound may be emanated upon insertion of the stamp into the housing 36. For example, a particular stamp contains the visual impression of a lion. It may be desired to announce the phrase "This is a lion" upon insertion of the stamp into the stamp handle. Then, upon detecting pressure contact with the face 60 of stamp 42, the sound of a lion's roar may be emitted.

To implement this embodiment, an additional Load Switch and Load Tab may be provided. Like the Start Tab (shown in FIG. 3), the Load Tab is slightly offset from tabs 81-85, but not as far recessed as Start Tab 86. This helps insure that all tabs 81-85 provided on that particular stamp 42 have closed the corresponding switches 51-55, before the Load Tab closes the load switch. Alternatively, and without employing a separate load switch, the circuitry could be designed to monitor switches 51-55 first for a change (indicating insertion of a stamp), then for a steady state to be reached (over 0.3 seconds for example). At that time, the circuitry could assume that the stamp 42 is fully inserted, and would emanate the appropriate sound.

In yet another embodiment, it may be desired to eliminate the start switch 56 entirely. In such an embodiment, the stamp encoding switches 51-55 are open when the stamp 42 is relaxed (i.e., not depressed). Depression of the stamp 42, however, causes the appropriate switch contacts to close. The particular implementation of this embodiment will be discussed in more detail below.

Referring briefly to FIG. 4, an electrical component layout is generally shown. More particularly, the stamper 14 is connected via conductive cable 15 to an electrical connector 67 disposed on the side of the base unit 12 (represented by a rectangle in Fig. 4). The individual conductive lines 68 housed inside cable 15 are generally directed to support cartridge 16, and more particularly, to a printed circuit board 70 housed within cartridge 16. Also electrically connected to printed circuit board 70 are a power source 65, such as a battery, and a speaker 20. Both the battery 65 and speaker 20 are housed inside base unit 12.

Printed circuit board 70 is illustrated in Fig. 4 as being within the boundaries of base unit 12. It should be appreciated, however, that the cartridge 16 which houses circuit board 70 is physically distinct from base unit 12 and is attached via an in-line connector. In another embodiment, and consistent with the concepts and teachings of the present invention, printed circuit board 70 may be housed directly within the base unit 12, thereby eliminating the cartridge 16.

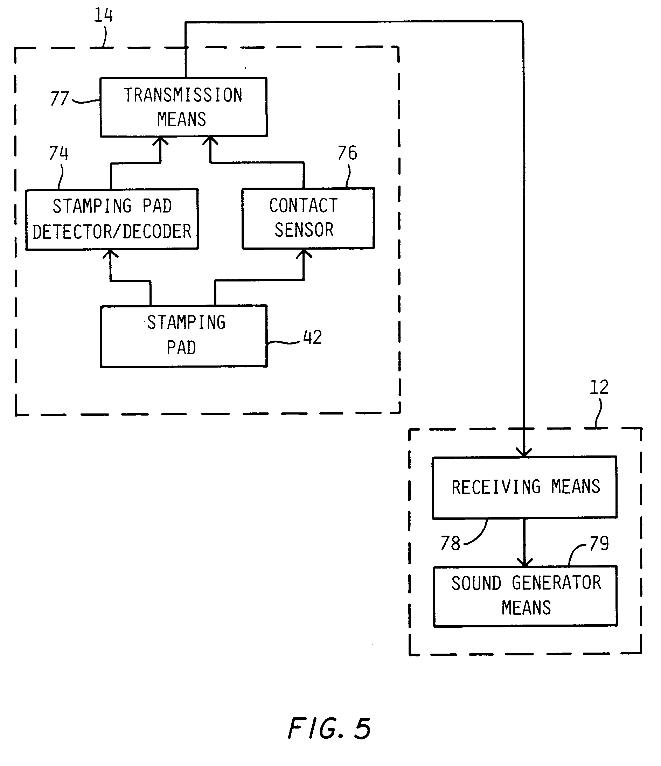

Referring now to Fig. 5, a functional block diagram of the present invention is shown. As previously described, the stamp 42 includes a visual image imprinted thereon and is disposed for transfer to a stamping surface. A stamp detector/decoder 74 and contact sensor 76 are responsive to the stamp 42. Specifically, the stamp detector/decoder 74 serves to uniquely identify the stamp and circuit. As previously described, the stamp detector/decoder 74 of the presently preferred embodiment comprises switches 51 through 55 and corresponding tabs 81 through 85 (see Fig. 2A). The contact sensor 76 serves to identify pressure contact applied to stamp 42. In one embodiment, start switch 56 and start tab 86 perform this function.

A transmission means 77 is responsive to the stamp detector/decoder 74 and contact sensor 76 to transmit the information obtained by those functional blocks to a receiving means 78, which forwards this information along to sound generating means 79. In one embodiment, the transmission means 77 and receiving means 78 are merely the conductive cabling 15 that is used to directly connect switches 51 through 55 and 56 to the electronic circuitry contained on circuit board 70 (see Fig. 4). This can also be appreciated in reference to the schematic diagram shown in Fig. 6, which will be discussed below.

As was previously described, in other embodiments, ultrasonic, infrared or RF transmitters/receivers may be utilized to transmit the information from stamper 14 to base unit 12, without requiring a direct connection via electric cabling 15. In any of these embodiments, discrete electronic circuitry will be associated with both the transmission means 77 and receiving means 78. Once the electrical information is received at the base unit 12, it is forwarded to the sound generating means 79, which transforms the electrical information signals derived from switches 51 through 55 and 56 to an appropriate electronic signal that may be transmitted to a speaker 20 to emit sounds that are logically associated with the particular stamp 42 presently inserted in the stamper 14.

As understood by persons of ordinary skill in the art, a wide variety of sound-generating means 79 may be employed to perform this function. For example, a number of commercially available speech processing or speech synthesizing chips are presently known which in connection with the proper support chips can accomplish this function. In addition, an appropriately programmed microprocessor or micro-controller circuit could achieve this function as well. In an embodiment that will be discussed in more detain below, the W5282 voice synthesizer chip manufactured by Winbond is utilized. Other voice synthesizer chips in the Winbond line may also be used, including the W5281, W5283, W5284, W5285, W5286, W5287, and the W5288. As is known, these chips have the same command structure, and differ primarily in memory capacity. Another line of voice synthesizer chips identified which may be utilized in the present invention include the TMS035, TMS060, TMS090, TMS138, TMS180, and TMS240, manufactured by Technomind. Again, these chips have a generally similar architecture and differ primarily in memory capacity. Implementation of the TMS060 in connection with the present invention is illustrated in FIG. 6B.

In keeping with the invention, Fig. 6 shows the schematic diagram for the electronic circuitry of one embodiment if the present embodiment, utilizing a chip from the Winbond line. The stamper 14 and support cartridge 16 are shown in dashed lines as rectangular boxes. The boxes illustrate how the circuitry of one embodiment of the present invention is divided among the stamper 14, support cartridge 16 and the base unit 12. In this regard, it should be appreciated that the circuitry not enclosed in either dashed lines 14 or 16 is provided in the base unit 12.

At the heart of the electronics is the voice synthesizer chip 80. As previously mentioned, this chip is manufactured by Winbond. Accordingly, data sheets for these devices may be readily obtained, and it is assumed for purposes of this disclosure that the information therein would be known and appreciated by persons of ordinary skill in the art. In short, these chips offer up to approximately 63 seconds (depending on the particular model) of speech or voice synthesis time, which does not include repetition periods or silent periods. They also include a direct drive alpha signal for direct connection to a speaker. Indeed, as illustrated in Fig. 6, the audio output of chip 80 is directly connected to the base of transistor Q1, which is connected to speaker 20. Switches 51 through 55 are electrically connected with device 80 as illustrated, and start switch 56 is directly connected to input TG1, which is triggerable input.

As will be appreciated by those skilled in the art, the speech and sound effects are encoded into a soundfile using adaptive pulse code modulation (ADPCM). The internal ROM of the chip is partially masked (during fabrication) with the soundfile and partially masked with microcode. The particular soundfile and microcode will vary from application to application, and examples of certain application are presented below.

FIGS. 6A-6C show schematic diagrams for various embodiments of the present invention. Specifically, FIG. 6A shows an embodiment utilizing three encoder switches 151-153 and a start switch 156. Like FIG. 6, the voice synthesizer chip 180 of FIG. 6A is a chip from the Winbond line. FIG. 6B, depicts an embodiment utilizing the TMS060 voice synthesizer chip 280 from the Technomind line. Switches 251-254 are used to identify the stamp 42, while switch 256 is utilized to identify the memory page. That is, in this chip, memory is divided into two pages, and is identified by the state of switch 256. Unlike the Winbond chips, however, the addressing of the TMS chips is not encoded. Thus, the four switches switches 251-254 identify one of four addresses on each memory page, for a total of eight identifiable sounds. In this regard, it is contemplated that only one of the switches 251-254 will be closed at a given time.

FIG. 6C again illustrates an embodiment utilizing a chip 380 from the Winbond line. This embodiment, however eliminates the start switch. Instead, and as previously mentioned, the stamp encoding switches 351-354 will generally remain open, and, like the start switch 56 of FIG. 6, will close commensurate with the depression of the stamp 42. In this embodiment, the chip 80 is programmed during manufacture to monitor these switch inputs. Once closure of any of the switches 351-354 is detected, the chip is programmed to provide an appropriate delay (several microseconds) and debouncing before reading the state of the encoded switches 351-354. The delay permits adequate time for all the switches to close.

The foregoing embodiments provide only a few brief examples of particular chip/circuit embodiments which may be utilized by the present invention. Those skilled in the art will appreciate that other chips and circuit embodiments may be utilized as well.

Having described the structure and circuitry of one embodiment, a brief description of its operation will now be presented. It is contemplated that a wide variety of visual images may be imprinted on individual stamps 42 for interchangeable use in the stamper 14 of the present invention. For example, one particular stamp may include the image of a lion, and tabs 81 through 85 forming a part of the stamp would be particularly configured to uniquely identify that stamp to the device. Upon applying pressure contact to the stamping 42 (after its insertion in the stamper 14) the sound generating means 79 would emanate a logically associated sound. For example, the sound generating means 79 may be configured to emanate the sound of a lion's roar or, alternatively, to emanate the phrase: "This is a lion." A different stamp may have the image of a dog, and the sound generating means 79 may emanate the sound of a dog barking or, alternatively, emanate the phrase: "This is a dog."

It can be further appreciated that the images provided on the various stamps are not limited to animals. Indeed, it is contemplated that a wide variety of images may be imprinted onto various stamps. For example, images of devices such as bells, whistles, fire engines, police cars, as well as shapes such as circles, squares, triangles may be included. In this way, the device facilitates a child's educational development by teaching or reinforcing sights and sounds. It may also be desired to provide stamps that are theme oriented, such as stamps relating to the weather, people's jobs, outer space, sounds of a story, etc. For example, a stamp having a visual image of a rain cloud or a lightening bolt may make the sound of thunder when depressed. Alternatively, a stamp may have a visual image of a fireman and recite "This is a fireman" when depressed.

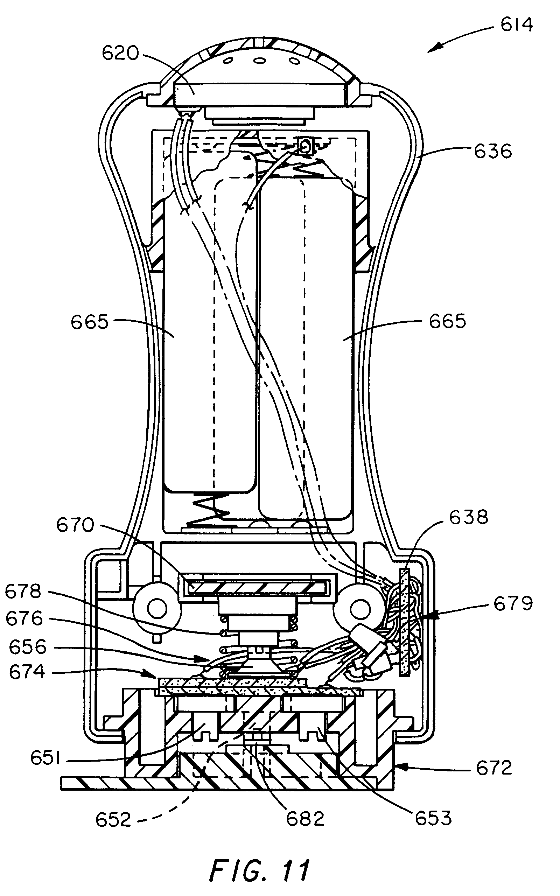

It can be appreciated that, while the foregoing has described one embodiment as having a stamper 14 physically remote but electrically connected to a base unit 12, the concepts and teachings of the present invention could be incorporated into a single, hand held stamper unit for use with a plurality of interchangeable stamps as shown in FIG. 11. In such an embodiment, of course, all of the electronics, including the sound generating means 679, would be included within the physical confines of the stamper 614. In other words, as shown in FIG. 11, the single piece stamper 614 would include a speaker 620, one or more batteries 665, a stamp detector/decoder 674, a contact sensor 676 and a printed circuit board 638, all contained within the housing 636 of the stamper 14. The printed circuit board 638 implements the sound generating means 679 via electronic circuitry in accordance with the above description. As in the earlier described embodiments, in the single piece stamper embodiment the stamp detector/decoder 674 is implemented by the interaction of switches 651-654 (similar to switches 51-54) and various combinations of tabs 681-684 (similar to tabs 81-84) on the interchangeable stamps.

In this embodiment, however, the contact sensor 676 is implemented by a start switch 656 positioned between a secured platform 670 and a movable stamp receiving assembly 672. More specifically, the stamp receiving assembly 672 is movable relative to the rest of the housing 636 of the one piece stamper. A spring 678 is positioned between the secured platform 670 and the stamp receiving assembly 672 which biases the stamp receiving assembly 672 downwards with respect to the rest of the housing 636. When a user applies the stamper to a surface to be stamped, the stamp receiving assembly 672 will move upwards with respect to the housing 626. As mentioned above, the start switch 656 is positioned between the secured platform 670 and the stamp receiving assembly 672. When the stamp receiving assembly 672 moves upwards due to pressure applied by a user, the switch 656 will be depressed thereby providing an electrical signal indicating that pressure has been applied to the stamp surface. When the user stops pressing the one-piece stamper against the surface to be stamped, the stamp receiving assembly 672 will move to its rest position under the force of the spring 678 as shown in FIG. 11.

Those skilled in the art will appreciate that, although the embodiment shown in FIG. 11 employs start switch 656 as the contact sensor, start switch 656 could be replaced with a start switch (similar to switch 56 in FIG. 3) and a mating start tab located on the interchangeable stamps (similar to start tab 86 in FIG. 3) without departing from the scope of the invention.

Similarly, those skilled in the art will appreciate that in other embodiments, the circuitry could be apportioned between the stamper 14 and base 12 in various ways, and the present invention is not limited to any particular apportionment. For example, the speaker could be located in the base and the other components in the stamper. Similarly, the battery could be located in the base and the other components in the stamper. As another example, the battery and speaker could be located in the base and the other components in the stamper.

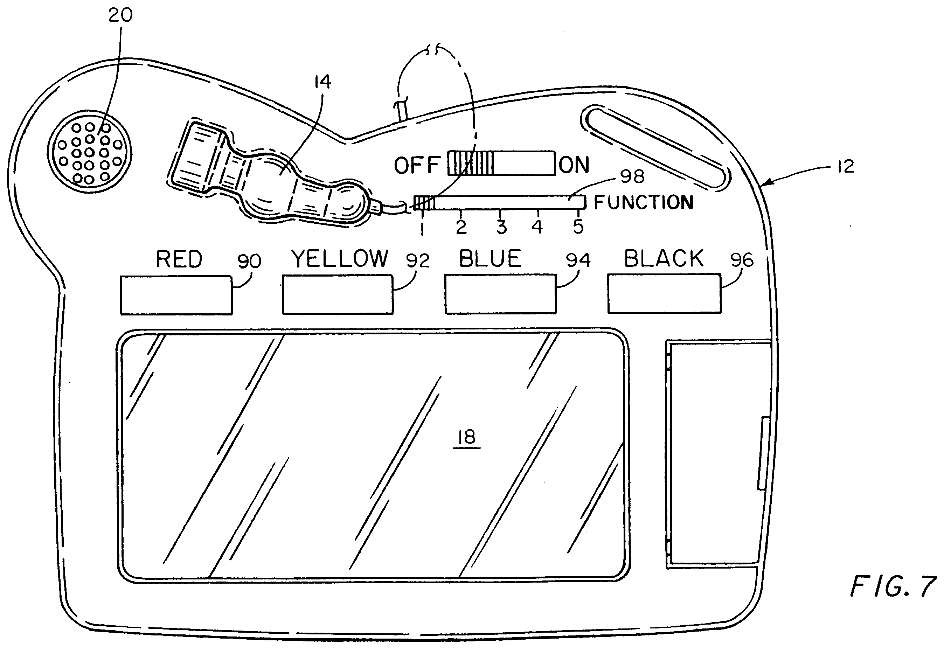

Fig. 7 illustrates another embodiment of the present invention. In this embodiment, the principal operation of the invention is the same as shown and described in connection with Fig. 1. However, additional features are provided by way of a function control means, such as function switch 98 and ink pads, such as red ink pad 90, yellow ink pad 92, blue ink pad 94, and black ink pad 96. Pressure sensitive switches may be combined with the various ink pads to detect pressure contact made therewith as, for example, by pressing the stamper 14 against a given ink pad to apply ink to the stamp inserted therein. The circuitry of this embodiment may be appropriately designed to factor the output of these pressure sensitive switches into the audible output emanated from speaker 20.

For example, it was previously described how a stamp having the visual impression of a lion may be inserted into the stamper 14, whereby applying this stamp against the stamping surface 18 would generate a lion's roar, or alternatively a synthesized message saying: "This is a lion." In the embodiment of Fig. 7, the circuitry may be appropriately designed to factor in the last inking pad that was stamped by the stamper 14. In this way, the output message from the speaker 20 may say: "This is a red lion."

In addition, a function switch 98 may be included to provide enhanced functionality of the present invention. For example, with function switch 98 in position number 1 (and continuing with the example with the lion stamp), pressure contact detected by the contact sensor may result in the output sound being that of a lion's roar. With function switch 98 in position number 2, pressure contact detected by the contact sensor may result in an output stating: "This is a lion." With function switch 98 in position number 3, the output may be programmed to factor in the last inking pad depressed, thereby emitting: "This is a red lion." In position number 4, for example, the stamper 14 may be configured to detect the insertion of a stamp, whereby a particular sound may be emanated upon the insertion of the stamp 42 into the stamper 14, and a different sound made when the stamp is applied to the stamping surface 18. Similarly, with function switch 98 in position 5 yet a different combination of sounds may be made. Continuing along this line, it can be appreciated that additional positions along function switch 98 may be consistently included to enhance the functionality of the present invention.

Accordingly, to accommodate the embodiment of Fig. 7 the electronic circuitry must be designed appropriately. For example, the Winbond chip specifically adapted for the embodiment illustrated in Fig. 1 would either have to be substituted by another chip or circuit, or the support circuitry surrounding the Winbond chip redesigned. Nevertheless, it is appreciated that one of ordinary skill in the art would be able to effectuate the circuit design to achieve the teachings described herein.

A further embodiment is illustrated in FIGS. 8 and 9. In this embodiment, the stamper 114 is attached to a base unit 112, which has a speaker 120 but no stamping surface. This embodiment is advantageous in so far as it is a lower cost alternative to some of the embodiments previously discussed. It is appreciated that a support cartridge (reference numeral 16 of FIG. 1) may also be provided with this embodiment to provide greater product versatility.

The stamper 114 also has a slightly different configuration than that illustrated and described in connection with the earlier embodiments. Like the earlier embodiments, however, the stamper 114 of this embodiment includes five switches (only 451 shown) that together identify the particular stamp 142 inserted. Generally, the switches are conductive contacts normally biased away from a printed circuit board 138. Closely positioned parallel traces are provided on the printed circuit board 138 in connection with each contact. When the stamp 142 is inserted (as illustrated) the switch 451 is urged into contact with printed circuit board 138 where the contact 451 bridges (creates an electrical short) the pair of conductive traces and thus closes the switch. Start switch 456 operates in substantially the same way. More specifically, stamper 114 includes an outer sleeve 104 that slidably receives an inner stem 106. The stem 106 includes a tip 108 which, reacts to axial pressure (e.g., the stamping action of the stamper 114). The tip 108 urges into contact with start switch 456 to bridge the pair of electrical traces underlying the contact, and thus close the switch.

Wires 168 communicate the electrical information from the printed circuit board 138 through conductive cabling 115 to the base unit 112. As previously mentioned, the functional aspects of this embodiment are the same as the embodiments previously discussed. Namely, depression of the start switch 456 initiates the sound emanation corresponding to the particular stamp 142 inserted.

The stamp of this embodiment is formed of a resilient rubber material and is retained within stamper 114 by a press fit engagement into the lower housing on the stamper 114. A gripping tab 111 projects out from the stamp 142 to provide a ready means of removing the stamp 142 from the stamper 114.

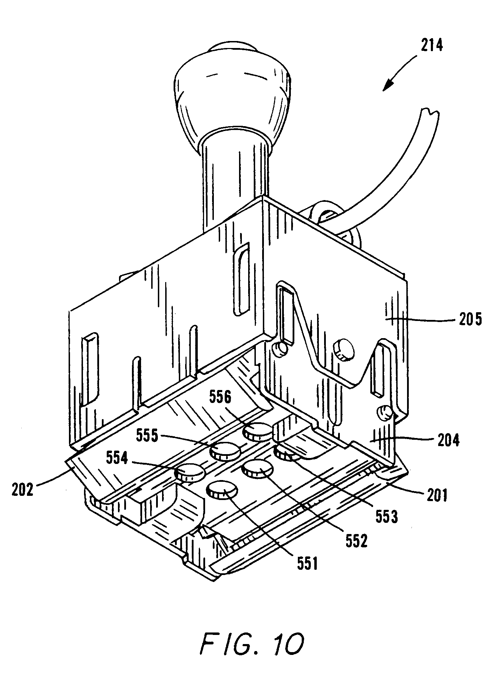

A further embodiment is shown in FIG. 10. Electronically, this stamper 214 operates substantially like those in the previously discussed embodiments, and this embodiment is shown to illustrate an alternative mechanical structure. Rather than passively receiving the stamps by a press-fit engagement, the stamper 214 actively grips the stamps. This gripping action is achieved by two opposing jaws 201 and 202. This jaws 201 and 202 are normally spring-biased inwardly to the closed position. However the jaws 201 and 202 may be opened (as illustrated) to receive a stamp, and thereafter released to close and retain the stamp.

More particularly, the stamper 214 includes two sleeved portions: an inner sleeved portion 204 and an outer sleeved portion 205. The inner portion 204 slides within the outer portion 205 in order to permit the jaws 201 and 202 to open and receive the stamp. Thereafter, the inner portion 204 slides into the outer portion 205, which serves to prevent the jaws 201 and 202 from opening and releasing the received stamp. The jaws 201 and 202 engage the edges of the stamp to retain the stamp.

As shown, the stamper 214 of this embodiment has six switches 551-556. Up to six corresponding tabs are provided on the stamp to close up to six of the switches to identify the particular stamp. As in the other embodiments, depression of the stamper 214 causes the device to emit the sound corresponding to the inserted stamp.

All of the references including patents, patent applications, devices and technical articles cited herein are hereby incorporated in their entireties by reference.

The foregoing description of various embodiments of the invention has been presented for purposes of illustration and description. It is not intended to be exhaustive or to limit the invention to the precise forms disclosed. Obvious modifications or variations are possible in light of the above teachings. The embodiments discussed were chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly, legally, and equitably entitled.

## Claims

1. An interactive stamping device for use with a plurality of interchangeable stamps comprising:
a stamper configured to receive at least one of the interchangeable stamps;
a contact sensor configured to detect pressure applied to a surface of the received stamp; and
a sound generator responsive to the contact sensor to generate a sound.

2. An interactive stamping device according to claim 1 further comprising a stamp identifier to uniquely distinguish the stamps received by the stamper, wherein the sound generator is responsive to the stamp identifier such that the generated sound is indicative of the particular stamp identified by the stamp identifier.

3. The interactive stamping device according to claim 2, further comprising interchangeable stamps that are characterized by a variety of images impressioned on a surface of the stamps.

4. The interactive stamping device according to claim 3, wherein the stamp identifier is configured to uniquely identify stamps having a particular impressioned image.

5. The interactive stamping device according to claim 4, wherein the stamp identifier includes contact switches disposed on the stamper.

6. The interactive stamping device according to claim 5, wherein the stamp identifier further includes identifier tabs disposed on the stamps arranged to cooperate with the contact switches on the stamper so as to activate a select group of the contact switches.

7. The interactive stamping device according to claim 6, wherein the identifier tabs are uniquely configured for each stamp, to effect unique closure of the contact switches to identify each stamp inserted in the stamper.

8. The interactive stamping device according to claim 2, wherein the contact sensor is disposed in the stamper so as to detect pressure applied to a stamp coincident with pressure applied to a surface of the stamp.

9. The interactive stamping device according to claim 2 further comprising a base unit in electrical communication with the stamper having a receiver disposed to receive electrical signals; wherein the stamper includes a transmitter responsive to the stamp identifier and contact sensor to transmit an electrical signal containing information regarding the identity of the received stamp and the state of the contact sensor to the base unit and wherein the sound generator is disposed in the base unit.

10. The interactive stamping device according to claim 9, wherein the base unit includes a pressure sensitive stamping surface.

11. The interactive stamping device according to claim 10, wherein the contact sensor is disposed in the pressure sensitive stamping surface.

12. The interactive stamping device according to claim 9, wherein the transmitter includes a conductive cable interconnecting the stamper and base unit for communicating the electrical signal from the stamper to the base unit.

13. The interactive stamping device according to claim 9, wherein the stamper is physically remote from the base unit.

14. The interactive stamping device according to claim 13, wherein the transmitter includes an ultra-sonic transmitter for communicating the electrical signal from the stamper to the base unit.

15. The interactive stamping device according to claim 14, wherein the receiver includes an ultra-sonic receiver for receiving the transmitted electrical signal.

16. The interactive stamping device according to claim 13, wherein the transmitter includes a radio frequency transmitter for communicating the electrical signal from the stamper to the base unit.

17. The interactive stamping device according to claim 16, wherein the receiver includes a radio frequency receiver for receiving the transmitted electrical signal.

18. The interactive stamping device according to claim 9, wherein the transmitter includes a serial interface for generating a serial format for the electrical signal transmitted to the base unit.

19. The interactive stamping device according to claim 18, wherein the receiver includes a serial interface for receiving the electrical signal transmitted from the stamper.

20. The interactive stamping device according to claim 1, wherein the sound generator includes a speaker.

21. The interactive stamping device according to claim 20, wherein the sound generator includes an electronic circuit that is responsive to the electrical signal received from the stamper, the electronic circuit having an output signal electrically connected to the speaker, the output signal controlling the speaker to emanate sounds indicative of a particular received stamp.

22. The interactive stamping device according to claim 9, wherein the base unit is adapted to receive an interchangeable cartridge, the cartridge having electronic circuitry that forms a part of the sound generator.

23. The interactive stamping device according to claim 22, wherein interchangeable cartridges are provided to cooperate with the sound generator to support a larger number of stamps.

24. The interactive stamping device according to claim 22, wherein interchangeable cartridges are provided to cooperate with the sound generator to provide a variety of sounds for a particular stamp.

25. The interactive stamping device according to claim 9, wherein the base unit further includes a function controller to controllably vary the output from the sound generator.

26. The interactive stamping device according to claim 25, wherein the function controller includes a multi-position switch.

27. The interactive stamping device according to claim 9, wherein the base unit further includes a plurality of ink pads.

28. The interactive stamping device according to claim 27, further including a plurality of contact sensors disposed to detect pressure contact applied to the ink pads.

29. The interactive stamping device according to claim 28, wherein the sound generator is responsive to pressure contact applied to the ink pads and detected by the contact sensors.

30. The interactive stamping device according to claim 2, further including a function controller to controllably vary the output emanated from the sound generator.

31. The interactive stamping device according to claim 30, wherein the function controller includes a multi-position switch.

32. The interactive stamping device according to claim 2, further including a plurality of ink pads.

33. The interactive stamping device according to claim 32, further including a plurality of contact sensors disposed to detect pressure contact applied to the ink pads.

34. The interactive stamping device according to claim 33, wherein the sound generator is responsive to pressure contact applied to the ink pads and detected by the contact sensors.

35. The interactive stamping device according to claim 1 wherein the contact sensor and the sound generator are disposed in the stamper.
